# EUROPÄISCHE PATENTSCHRIFT

(11) **EP 2 311 625 B1**
(45) Veröffentlichungstag und Bekanntmachung des Hinweises auf die Patenterteilung: **21.11.2012**
(21) Anmeldenummer: 10186931.1
(22) Anmeldetag: 08.10.2010
(51) Int. Cl.: B29C 49/56, B29C 33/26, B29C 49/36

(54) **Formträger mit Antriebseinrichtung**
Mould carrier with drive device
Porte-moule doté d'un dispositif d'entraînement

(30) Priorität: 13.10.2009 DE 102009049260
(43) Veröffentlichungstag der Anmeldung: 20.04.2011
(73) Patentinhaber: Krones AG, 93073 Neutraubling (DE)
(72) Erfinder: Penninger, Josef, 94167 Tettenweis (DE); Stoiber, Christian, 93185, Michelsneukirchen (DE); Blochmann, Erik, 93073, Neutraubling (DE); Philipp, Thomas, 93161, Sinzing-Eilsbrunn (DE)
(74) Vertreter: Hannke, Christian

(56) Entgegenhaltungen:
- EP-A1- 1 520 681
- DE-A1-102008 029 531
- US-A1- 2008 143 022
- US-A1- 2008 220 115

## Beschreibung

Die vorliegende Erfindung bezieht sich auf eine Vorrichtung zum Umformen von Kunststoffvorformlingen zu Kunststoffbehältnissen. Aus dem Stand der Technik ist es seit langem bekannt, dass Kunststoffvorformlinge innerhalb so genannter Blasstationen, üblicherweise mittels Beaufschlagung durch Druckluft, zu Kunststoffbehältnissen expandiert werden. Dabei werden die Kunststoffvorformlinge in eine Blasform eingebracht, diese Blasform anschließend geschlossen und der Kunststoffvorformling durch Beaufschlagung mit Druckluft zu einem Kunststoffbehältnis expandiert. Nach diesem Expansionsvorgang muss das so fertig gestellte Behältnis wieder aus der Blasform entnommen werden. Zu diesem Zweck ist es erforderlich, dass Formteile bzw. Formträgerhälften auseinandergeklappt werden, um auf diese Weise das Herausnehmen der Behältnisse zu ermöglichen.

Üblicherweise ist eine Vielzahl derartiger Blasstationen an einem so genannten Blasrad oder einem sonstigen Träger angeordnet, so dass mehrere Behältnisse im Wesentlichen gleichzeitig hergestellt werden können. Eine im Grundgestell dieses Blasrades stationär angeordnete Kurve treibt dabei im Stand der Technik eine Ansteuerwelle an. Die dadurch eingeleitete Drehbewegung wird auf Anlenkhebel übertragen. Diese Anlenkhebel sind mit Auslegern der Formträgerhälften verbunden, so dass die von den Anlenkhebeln übertragenen Zug- und Druckkräfte die Öffnungs- und Schließbewegung der Formträgerhälften erzeugen.

Aus der DE 42 12 583 A1 ist eine derartige Vorrichtung zur Blasformung bekannt. Dabei sind die beiden Ausleger der Formträgerhälften schwenkbar um eine gemeinsame Schwenkachse angeordnet, und an diesen Auslegern sind wiederum schwenkbar zwei Anlenkhebel befestigt. Ein Betätigungselement betätigt diese beiden Anlenkhebel, wobei sich dieses Betätigungselement genau entlang einer Mittellinie des Formträgers bewegt. Auf diese Weise kann die Blasform in zuverlässiger Weise geöffnet und geschlossen werden. Allerdings erfordert die aus der DE 42 12 583 A1 bekannte Lösung relativ starke Drehmomente, da hierbei nicht nur Schwenk- bzw. Drehbewegungen auftreten, sondern auch das Betätigungselement gegenüber einem Hebel verschoben werden muss, um die Symmetrie bezüglich der Mittellinie zu gewährleisten.

Eine Vorrichtung gemäß dem Oberbegriff der Ansprüche 1 und 2 wird in Dokument US-A-2008 143022 offenbart.

Der vorliegenden Erfindung liegt daher die Aufgabe zugrunde, das erforderliche Drehmoment zum Öffnen und Schließen der Blasform bzw. der Formteile zu reduzieren. Weiterhin sollen die mechanischen Belastungen auf Führungskurven, welche die Bewegungen der Formteile initiieren, reduziert werden. Gleichzeitig soll jedoch der Raumbedarf derartiger Anlagen möglichst gering gehalten werden. Diese Aufgaben werden erfindungsgemäß durch den Gegenstand des unabhängigen Anspruchs erreicht. Vorteilhafte Ausführungsformen und Weiterbildungen sind Gegenstand der Unteransprüche.

Eine Vorrichtung zum Umformen von Kunststoffvorformlingen zu Kunststoffbehältnissen weist wenigstens eine Blasstation auf, welche ein erstes Formteil und ein zweites Formteil aufweist. Dabei umgeben das erste Formteil und das zweite Formteil einen Hohlraum, innerhalb dessen die Kunststoffvorformlinge zu den Kunststoffbehältnissen expandierbar sind bzw. expandiert werden. Weiterhin ist auch das erste Formteil gegenüber dem zweiten Formteil bewegbar, um die Behältnisse der Blasstation entnehmen zu können.

Weiterhin ist ein erster Ausleger an einem ersten Formteil angeordnet, und ein zweiter Ausleger ist an einem zweiten Formteil angeordnet. Weiterhin ist ein erster Anlenkhebel vorgesehen, der gelenkig mit dem ersten Ausleger verbunden ist sowie ein zweiter Anlenkhebel, der gelenkig mit dem zweiten Ausleger verbunden ist. Dabei sind der erste Ausleger und der zweite Ausleger schwenkbar bezüglich wenigstens einer geometrischen Schwenkachse angeordnet und - insbesondere über die Anlenkhebel - mit einer Betätigungseinrichtung gekoppelt, welche eine Bewegung des ersten Auslegers und des zweiten Auslegers zum Bewegen der Formteile bewirkt.

Weiterhin ist die Blasstation mittels eines Trägers an einer Transporteinrichtung angeordnet und dieser Träger erstreckt sich durch eine geometrische Fläche, welche von den Auslegern und den Anlenkhebeln begrenzt wird und/oder die geometrische Anordnung der Ausleger und Anlenkhebel ist asymmetrisch bezüglich einer geometrischen Mittellinie der Blasstation angeordnet.

Im Stand der Technik ist die entsprechende tragende Struktur der Formträger und der Ansteuerung, das heißt der Formträgerhalter, in dem die Ansteuerwelle und die Formträgerachse gelagert sind, hinter dem Ansteuermechanismus angeordnet und damit in Richtung eines Zentrums der Maschine bzw. des Blasrades vorgesehen. In diesem Falle umbaut also der Formträgerhalter die Einheit aus dem Formträger mit dem Ansteuermechanismus. Im Rahmen dieser Ausführungsform wird vorgeschlagen, dass sich der Träger durch einen Bereich erstreckt, der von den beiden Anlenkhebeln und den Auslegern begrenzt wird. Auf diese Weise kann eine kinematische Verbesserung der Ansteuerung erreicht werden und weiterhin auch eine kleinbauende Bauweise der Maschine erreicht werden.

Im Gegensatz zu dem zitierten Stand der Technik, in dem sowohl die Ausleger als auch die Anlenkhebel jeweils symmetrisch bezüglich dieser Mittellinie sind, wird im Rahmen der Erfindung auch vorgeschlagen, bewusst eine asymmetrische Anordnung dieser Ausleger und Anlenkhebel zu wählen. Auf diese Weise wird die kinematische und geometrische Auslegung der Blasstation dahingehend optimiert bzw. verbessert, da das erforderliche Drehmoment an der Ansteuerwelle verringert wird. Vorzugsweise sind der erste Ausleger und der zweite Ausleger schwenkbar bezüglich einer gemeinsamen geometrischen Schwenkachse angeordnet, es wäre jedoch auch möglich, dass der erste Ausleger um eine erste Schwenkachse schwenkbar ist und der zweite Ausleger um eine zweite Schwenkachse und diese beiden Schwenkachsen vorteilhaft parallel zueinander sind.

Es wäre jedoch auch möglich, dass das geometrische Viereck, welches sich aus den Anlenkachsen zwischen den Auslegern und Anlenkhebeln, aus der Schwenkachse und aus derjenigen Achse bezüglich der die beiden Anlenkhebel schwenkbar angeordnet sind, zusammensetzt, in seiner Gesamtheit assymetrisch bezüglich der Mittelinie angeordnet ist. Diese Mittellinie erstreckt sich in einem geschlossenen Zustand der Blasform zwischen den beiden Formteilen. Bevorzugt ist diese Mittellinie bzw. Mittelebene auch eine Symmetrieebene für die Blasform in einem geschlossenen Zustand. Die Schwenkachse liegt bevorzugt auf dieser Mittellinie und die beiden Formteile öffnen sich vorteilhaft symmetrisch bezüglich dieser Mittellinie bzw. Mittelebene.

Durch die Anordnung des Trägers zwischen den Auslegern und den Anlenkhebeln können insgesamt die Ausleger und die Anlenkhebel länger ausgestaltet werden und so können auch bei symmetrischer Bauweise die erforderlichen Drehmomente verringert werden, wobei gleichzeitig Bauraum eingespart werden kann. Damit dienen die oben beschriebenen Maßnahmen beide der Reduzierung der erforderlichen Drehmomente bzw. Kräfte.

Im Rahmen aufwendiger Untersuchungen der Ansteuerung konnte gezeigt werden, dass die niedrigsten Drehmomente an der Ansteuerwelle bei der genannten asymmetrischen Anordnung der Ausleger oder Anlenkhebel gegeben ist. Unter einer asymmetrischen geometrischen Anordnung wird verstanden, dass die einzelnen Ausleger und Anlenkhebel nicht bezüglich dieser Mittellinie symmetrisch sondern bewusst asymmetrisch gewählt sind. Diese Asymmetrie kann beispielsweise durch unterschiedliche Längen der Ausleger oder auch der Anlenkhebel erreicht werden oder auch durch bewusst asymmetrische Anordnung der einzelnen Schwenkachsen.

Vorteilhaft sind die Ausleger starr an den jeweiligen Formteilen ausgebildet. Bei den Formteilen handelt es sich insbesondere um Formträgerhälften, die zusammen- bzw. auseinandergeklappt werden können, um innerhalb der Formträgerhälften Behältnisse zu expandieren bzw. fertig gestellte Behältnisse herauszunehmen.

Vorteilhaft sind die Formteile daher an einer gemeinsamen Welle schwenkbar angeordnet bzw. auf einer gemeinsamen Welle geführt.

Unter einer gelenkigen Verbindung zwischen den Anlenkhebeln und Auslegern wird insbesondere verstanden, dass der Anlenkhebel bezüglich einer definierten Schwenkachse gegenüber dem Ausleger schwenkbar ist. Damit sind vorteilhaft zwei derartige Schwenk- bzw. Anlenkachsen vorgesehen, wobei diese Anlenkachsen vorteilhaft zumindest zeitweise während eines Öffnungs- und Schließvorganges asymmetrisch bezüglich oben gesagter Mittellinie angeordnet sind.

Durch diese erfindungsgemäße Auslegung der Geometrien kann eine Leistungssteigerung insbesondere eine Drehzahlerhöhung der Maschine realisiert werden, ohne den Verschleiß an der Kurve aufgrund erhöhter Belastung zu erhöhen.

Vorteilhaft weisen der erste Ausleger und der zweite Ausleger eine unterschiedliche Länge auf. Durch diese unterschiedliche Länge ergibt sich die oben genannte asymmetrische Gesamtanordnung.

Die hier beschriebene kinematische Optimierung der Ansteuerung hat zur Folge, dass sich die Ansteuerwelle weiter nach hinten verlagert, das heißt weiter in Richtung des Zentrums der Maschine bzw. des Blasrads. Die Beibehaltung der im Stand der Technik üblichen Anordnung des Formträgerhalters hätte zur Folge, dass die gesamte Einheit mehr Bauraum in Richtung des Maschinenzentrums beansprucht, und somit vor allem bei kleinen Teilkreisdurchmessern weniger Teilungen realisiert werden können als bisher. Um dies zu umgehen, wird - wie erwähnt - vorteilhaft die tragende Struktur, das heißt der Formträgerhalter zwischen den Anlenkhebeln und den Auslegern der Formträgerhälften hindurchgeführt.

Vorteilhaft ist damit im Gegensatz zu dem Gegenstand der DE 42 12 583 A1 stets ein vorbestimmter Abstand zwischen der Betätigungseinrichtung bzw. einer Welle, welche die beiden Anlenkhebel miteinander verbindet und die Schwenkachse der Ausleger ist unabhängig von der jeweiligen Öffnungsstellung der Formteile vorhanden. Durch diesen Zwischenraum kann in jedem Fall auch der besagte Träger geführt werden.

Bei einer weiteren vorteilhaften Ausführungsform ist die Transporteinrichtung ein um eine Drehachse drehbares Tragteil. Bei diesem Tragteil kann es sich beispielsweise um ein Blasrad handeln, an dem eine Vielzahl von Blasstationen angeordnet ist.

Bei einer weiteren vorteilhaften Ausführungsform sind der Ausleger und die Anlenkhebel derart angeordnet, dass sich die Formteile aufeinander zubewegen, wenn sich die Anlenkhebel voneinander weg bewegen. Im Gegensatz zu der DE 42 12 583 A1 wird damit im Rahmen dieser Ausführungsform kein Scherenmechanismus vorgeschlagen, sondern eine hier kinematisch günstigere Ausführungsform. Unter einem Aufeinanderzubewegen der Ausleger wird dabei verstanden, dass sich insbesondere die beiden Anlenkachsen, an denen die Ausleger an den Anlenkhebeln angeordnet sind, sich aufeinander zu bewegen. Dies bedeutet, dass sich ein Winkel zwischen den Anlenkhebeln verringert.

Bei einer weiteren vorteilhaften Ausführungsform sind die Anlenkhebel an Endabschnitten der Ausleger angeordnet und umgekehrt vorteilhaft auch die Ausleger an Endabschnitten der Anlenkhebel.

Bei einer weiteren vorteilhaften Ausführungsform sind die Anlenkhebel gegenüber einer gemeinsamen Schwenkachse schwenkbar. An dieser Schwenkachse sind vorteilhaft die beiden Anlenkhebel an die Betätigungseinrichtung angekoppelt.

Diese gemeinsame Schwenkachse bewegt sich dabei vorteilhaft bei einem Öffnen und Schließen der Formträger entlang einer kreisförmigen Bahn. So ist es möglich, dass ein Betätigungselement an einem Betätigungsarm angeordnet ist und dieser Betätigungsarm wiederum sich auf dieser kreisförmigen Bahn bewegt. Im Gegensatz hierzu wird im Falle der DE 42 12 583 A1 das Betätigungselement selbst bzw. die besagte Schwenkachse entlang einer geraden Linie bewegt.

Vorteilhaft weist daher das Betätigungselement einen schwenkbaren Betätigungsarm auf, der an beiden Anlenkhebeln und insbesondere über die geometrische Schwenkachse an den beiden Anlenkhebeln angelenkt ist. Vorteilhaft ist dabei einer der Anlenkhebel in einer Richtung dieser Schwenkachse oberhalb des Betätigungsarms angeordnet und der andere Anlenkhebel unterhalb dieses Betätigungsarms.

Der Betätigungsarm kann wiederum über eine Kurvenrolle in Zusammenwirkung mit einer Führungskurve betätigt werden. Es wäre jedoch auch ein motorischer, hydraulischer oder pneumatischer Antrieb dieses Betätigungsarms möglich.

Vorteilhaft ist der erste Ausleger gegenüber dem ersten Anlenkhebel bezüglich einer ersten Anlenkachse schwenkbar, und der zweite Ausleger ist gegenüber dem zweiten Anlenkhebel bezüglich einer zweiten Anlenkachse schwenkbar. Diese beiden Schwenkachsen sind - wie oben erwähnt - vorteilhaft, zumindest zeitweise, asymmetrisch gegenüber der genannten Mittellinie.

Vorteilhaft unterscheiden sich die Abstände zwischen der ersten Anlenkachse und der geometrischen Schwenkachse und zwischen der zweiten Anlenkachse und der geometrischen Schwenkachse. Dies bedeutet, dass insbesondere die Ausleger eine unterschiedliche Länge bzw. eine unterschiedliche geometrische Gestalt aufweisen.

Bei einer weiteren vorteilhaften Ausführungsform ist die geometrische Schwenkachse stationär gegenüber dem Trageteil angeordnet. Um diese geometrische Schwenkachse werden daher die beiden Formteile geschwenkt, wobei jede einzelne Blasstation eine derartige Schwenkachse aufweist, die dann stationär gegenüber dem Blasrad angeordnet ist.

Bei einer weiteren vorteilhaften Ausführungsform weist die Vorrichtung eine Kurve zum Betätigen des Betätigungselements, beispielsweise über eine Kurvenrolle, auf.

Bei einer weiteren vorteilhaften Ausführungsform weist die Vorrichtung ein Bodenteil auf, welches gegenüber den Formteilen zum Begrenzen des Hohlraums bewegbar ist. Dies bedeutet, dass sich nicht nur die beiden Formteile zum Schließen der Blasform aufeinander zubewegen, sondern zusätzlich auch noch ein Bodenteil, insbesondere von unten an die Seitenteile herangeführt wird, um so die Blasform zu schließen.

Vorteilhaft bestehen die Formteile zumindest teilweise aus Eisen- und/oder Stahlwerkstoffen. Wie oben erwähnt, wird durch die Erfindung eine Optimierung der aufzubringenden Drehmomente erreicht. Auf diese Weise ist es möglich, kostengünstigere, aber schwerere Materialien wie insbesondere Stahl oder Eisenwerkstoffe für den Formträger zu verwenden.

Weitere Vorteile und Ausführungsformen ergeben sich aus den beigefügten Zeichnungen.

Darin zeigen:
Fig. 1 eine erste perspektivische Darstellung einer erfindungsgemäßen Blasstation;
Fig. 2 eine weitere perspektivische Darstellung der Vorrichtung aus Fig. 1;
Fig. 3 eine Darstellung der Vorrichtung aus Fig. 1 von unten;
Fig. 4 eine weitere seitliche Darstellung einer Vorrichtung aus Fig. 1;
Fig. 5 eine weitere Darstellung der Vorrichtung aus Fig. 1;
Fig. 6 eine schematische Darstellung zur Veranschaulichung der Kinematik.

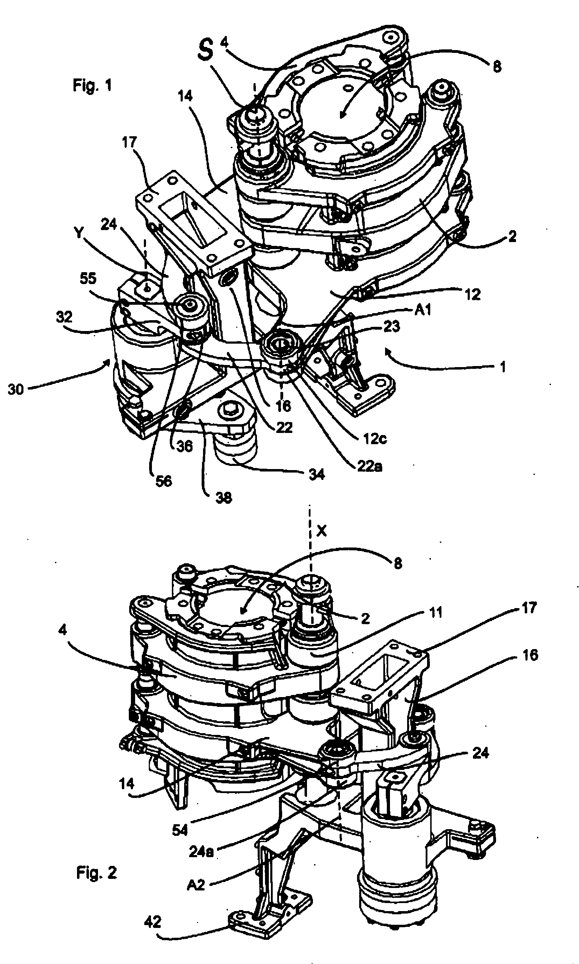

Fig. 1 zeigt eine Blasstation 1 für eine erfindungsgemäße Vorrichtung. Diese Blasstation 1 weist ein erstes Formteil 2 und ein zweites Formteil 4 auf, welche gegeneinander bezüglich einer Schwenkachse S schwenkbar sind und in einem in Fig. 1 gezeigten geschlossenen Zustand in ihrem Inneren einen Hohlraum 8 ausbilden. Innerhalb dieses Hohlraums 8 kann ein (nicht gezeigter) Vorformling mittels Druckbeaufschlagung zu einem Kunststoffbehältnis expandiert werden.

Das Bezugszeichen 12 bezieht sich auf einen ersten Ausleger, der fest an dem ersten Formteil 2 bzw. der ersten Formträgerhälfte 2 angeordnet ist. Ein entsprechender zweiter Ausleger 14 ist ebenfalls fest an dem zweiten Formteil 4 ausgebildet. Mit Hilfe dieser Ausleger 12, 14 können die beiden Formteile 2 und 4 gegeneinander bewegt bzw. um die Achse S auseinander- oder zusammengeschwenkt werden. Dabei sind die beiden Ausleger 12 und 14 bezüglich der Schenkachse S schwenkbar. In einem Endabschnitt 12c ist der erste Ausleger gelenkig mit einem ersten Anlenkhebel 22 bzw. einem Endabschnitt 22a dieses Anlenkhebels 22 verbunden.

Das Bezugszeichen 52 kennzeichnet dabei diese gelenkige Verbindung, welche eine Schwenkbarkeit bezüglich einer ersten Anlenkachse A1 bewirkt. Ein weiterer Anlenkhebel 24 ist (in Fig. 1 nicht gezeigt) ebenfalls gelenkig mit dem zweiten Ausleger 14 verbunden. Die Verbindung erfolgt dabei über jeweilige Endabschnitte 22a bzw. 24a (nicht gezeigt) der Anlenkhebel 22, 24, welche über eine Welle 23 mit den Auslegern in Verbindung stehen. Weitere Endabschnitte der Anlenkhebel 22 und 24 sind über eine Welle 55 und eine insgesamt mit 56 gekennzeichnete Gelenkverbindung mit einem Betätigungselement 36 verbunden. Dieses Betätigungselement ist dabei an einem Arm 32 angeordnet und bewegt sich auf einer im Wesentlichen kreisförmigen Bahn um eine Drehachse Y. Diese Drehbewegung wird durch eine Kurvenrolle 34 bewirkt, welche sich gegenüber einer (nicht gezeigten) Führungskurve bewegt und welche wiederum an einem Arm 38 angeordnet ist. Das Bezugszeichen 30 kennzeichnet die Betätigungseinrichtung zum Bewegen des Betätigungselements 36 in ihrer Gesamtheit.

Das Bezugszeichen 16 bezieht sich auf einen Träger, der sich hier durch eine Öffnung erstreckt, welche durch die beiden Ausleger 12 und 14 sowie die beiden Anlenkhebel 22 und 24 begrenzt wird. Das Bezugszeichen 17 kennzeichnet eine Montageplatte, um die Blasstation 1 um ein (nicht gezeigtes) Trägerrad anzuordnen. Eine entsprechende Drehachse dieses Trägerrads bzw. Blasrads wäre hier links unten bezüglich der Blasstation 1 vorgesehen.

Eine im Grundgestell des (nicht gezeigten) Blasrades stationär angeordnete Kurve treibt die Ansteuerwelle und damit das Betätigungselement 36 an. Die dadurch eingeleitete Drehbewegung wird auf die beiden Anlenkhebel 22, 24 übertragen. Diese Anlenkhebel sind mit den Auslegern 12, 14 der Formteile 2, 4 verbunden und die von den Anlenkhebeln übertragenen Zug- und Druckkräfte erzeugen die Öffnungs- und Schließbewegung der Formteile 2, 4.

Fig. 2 zeigt eine weitere Darstellung der erfindungsgemäßen Vorrichtung. Bei dieser Darstellung ist auch der zweite Ausleger 14 erkennbar sowie die Gelenkverbindung 54, mit welcher dieser zweite Ausleger an dem zweiten Anlenkhebel 24 angeordnet ist. Auch ist hier eine Halteeinrichtung 42 vorgesehen, welche in Verbindung mit dem Träger 16 steht und an der eine Mechanik angeordnet werden kann, um ein Bodenteil an die Blasform heranzuführen. Eine erste Gelenkverbindung 11, bezüglich der die beiden Formteile 2 und 4 schwenkbar sind, ist dabei stationär gegenüber einem (nicht gezeigten) Blasrad angeordnet.

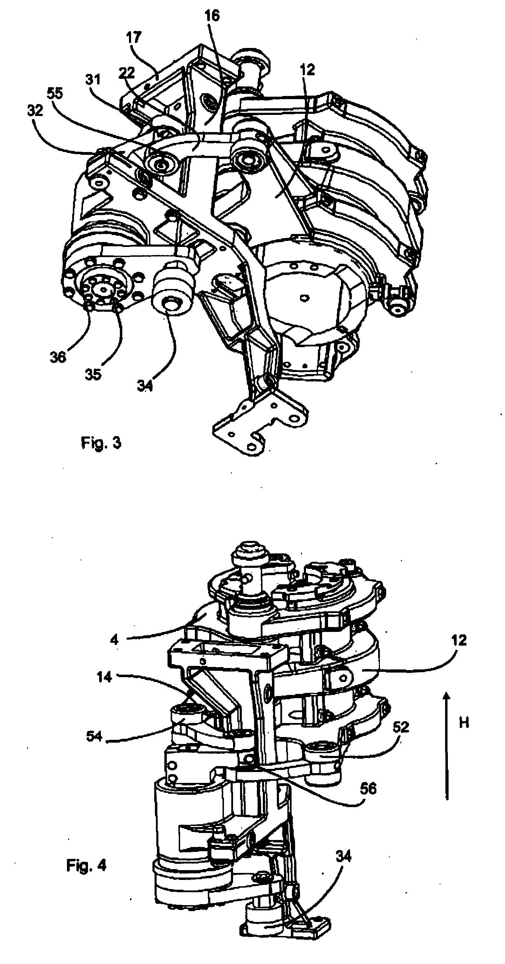

Fig. 3 zeigt eine weitere Darstellung der erfindungsgemäßen Vorrichtung von unten. Man erkennt hier insbesondere auch die Kurvenrolle 34, die über den Arm 36 an einer Welle 35 angeordnet ist und wiederum zum Bewegen des Arms 32 und dem daran angeordneten Betätigungselement 31 dient. Man erkennt hier, dass die beiden Anlenkhebel 22 und 24 höhenversetzt sind, wobei bei der in Fig. 3 gezeigten Ausführungsform der erste Anlenkhebel 22 tiefer liegt als der zweite Anlenkhebel 24.

Fig. 4 zeigt eine weitere Darstellung der erfindungsgemäßen Vorrichtung. Man erkennt hier, dass auch die beiden Ausleger 12 und 14 hinsichtlich ihrer Höhe versetzt sind, was sich hier daraus ergibt, dass auch die beiden Anlenkhebel 22 und 24 in der Höhenrichtung H versetzt sind.

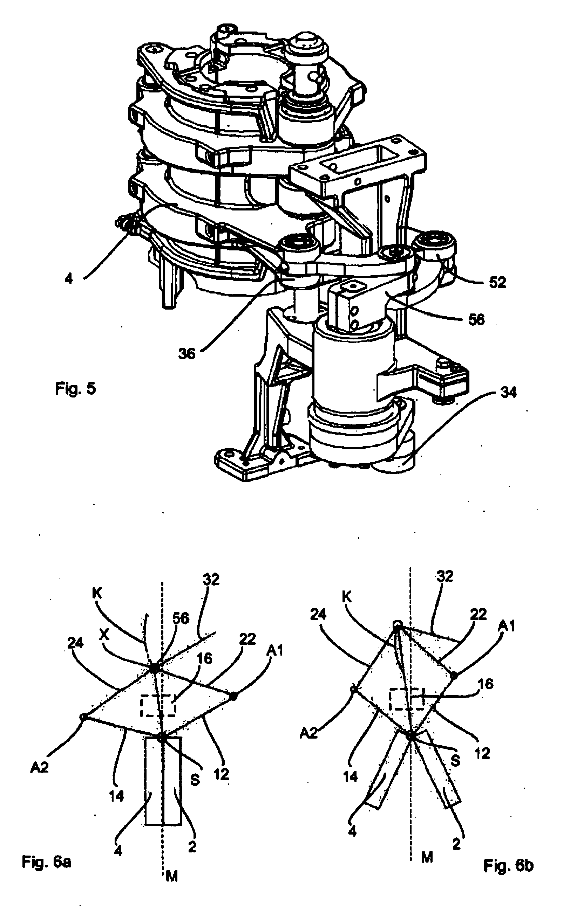

Fig. 5 zeigt eine weitere Darstellung einer erfindungsgemäßen Blasstation 1. Man erkennt hier wiederum die beiden Verbindungen 52 und 54, mit denen jeweils die Ausleger an den Anlenkhebeln angelegt werden.

Fig. 6 zeigt eine schematische Darstellung zur Veranschaulichung der Erfindung. Dabei sind insbesondere neben der Schwenkachse S auch die beiden Anlenkachsen A1 und A2 erkennbar sowie die Achse X, gegenüber der wiederum die beiden Anlenkhebel 22 und 24 angeordnet sind. Man erkennt, dass sich die gesamte Gelenkverbindung 56 entlang einer kreisförmigen Bahn K bewegt.

Durch die asymmetrische Auslegung der einzelnen Ausleger 12 und 14 bzw. der Anlenkhebel 22 und 24 kann eine insgesamt Drehmoment sparende Kinematik erreicht werden, um die beiden Formteile 2 und 4 zu öffnen bzw. zu schließen. Weiterhin ist, wie sich aus den Figuren ergibt, unabhängig von der Schließstellung der Blasform auch stets ein Abstand zwischen der Verbindung 56 und der Schwenkachse S vorhanden, so dass in diesem Zwischenbereich auch der Träger 16 angeordnet werden kann.

Das sich aus den Anlenkachsen A1 und A2, der Achse X und der Schwenkachse S ergebende Viereck ist im Gegensatz zu dem Stand der Technik hier asymmetrisch bezüglich der Mittellinie M der Blasform angeordnet. Bevorzugt besteht die Asymmetrie unabhängig von der Öffnungsstellung der Formteile 2, 4. Die linke Teilfigur von Fig. 6 zeigt einen geschlossenen Zustand der Formteile 2, 4 und die rechte Teilfigur einen geöffneten Zustand der Formteile 2,4.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Blasstation
- 2: erstes Formteil
- 4: zweites Formteil
- 8: Hohlraum
- 11: Gelenkverbindung
- 12: erster Ausleger
- 12c: Endabschnitt des ersten Auslegers
- 14: zweiter Ausleger
- 16: Träger
- 17: Montageplatte
- 22: erster Anlenkhebel
- 23: Welle
- 24: zweiter Anlenkhebel
- 22a, 24a: Endabschnitte der Anlenkhebel
- 30: Betätigungseinrichtung
- 32: Arm
- 34: Kurvenrolle
- 35: Welle
- 36: Betätigungselement
- 38: Arm
- 42: Halteeinrichtung
- 55: Welle
- 52, 54, 56: Gelenkverbindung

- S: Schwenkachse
- A1, A2: Anlenkachse

- X: Achse
- Y: Drehachse
- K: Kreisbahn
- H: Höhenrichtung

## Patentansprüche

1. Vorrichtung zum Umformen von Kunststoffvorformlingen zu Kunststoffbehältnissen, mit wenigstens einer Blasstation (1), welche eine erste Formträgerhälfte (2) und eine zweite Formträgerhälfte (4) aufweist, wobei die erste Formträgerhälfte (2) und die zweite Formträgerhälfte (4) einen Hohlraum (8) umgeben, innerhalb dessen die Kunststoffvorformlinge zu Kunststoffbehältnissen expandierbar sind und wobei die erste Formträgerhälfte (2) gegenüber der zweiten Formträgerhälfte (4) bewegbar ist, mit einem ersten Ausleger (12), der an der ersten Formträgerhälfte (2) angeordnet ist und einem zweiten Ausleger (14), der an der zweiten Formträgerhälfte (4) angeordnet ist, mit einem ersten Anlenkhebel (22), der gelenkig mit dem ersten Ausleger (12) verbunden ist und einem zweiten Anlenkhebel (24), der gelenkig mit dem zweiten Ausleger (14) verbunden ist, wobei der erste Ausleger (12) und der zweite Ausleger (14) schwenkbar bezüglich wenigstens einer geometrischen Schwenkachse (S) angeordnet sind und mit einer Betätigungseinrichtung gekoppelt sind, welche eine Bewegung des ersten Auslegers (12) und des zweiten Auslegers (14) zum Bewegen der Formträgerhälften (2, 4) bewirkt
**dadurch gekennzeichnet, dass**,
der erste Ausleger (12) fest an der ersten Formträgerhälfte (2) und der zweite Ausleger (14) fest an der zweiten Formträgerhälfte (4) angeordnet ist, wobei die Blasstation (1) mittels eines Trägers (16) an einer Transporteinrichtung angeordnet ist und sich dieser Träger (16) durch eine geometrische Fläche erstreckt, welche von den Auslegern (12, 14) und den Anlenkhebeln (22, 24) begrenzt wird.

2. Vorrichtung zum Umformen von Kunststoffvorformlingen zu Kunststoffbehältnissen, mit wenigstens einer Blasstation (1), welche eine erste Formträgerhälfte (2) und eine zweite Formträgerhälfte (4) aufweist, wobei die erste Formträgerhälfte (2) und die zweite Formträgerhälfte (4) einen Hohlraum (8) umgeben, innerhalb dessen die Kunststoffvorformlinge zu Kunststoffbehältnissen expandierbar sind und wobei die erste Formträgerhälfte (2) gegenüber der zweiten Formträgerhälfte (4) bewegbar ist, mit einem ersten Ausleger (12), der an der ersten Formträgerhälfte (2) angeordnet ist und einem zweiten Ausleger (14), der an der zweiten Formträgerhälfte (4) angeordnet ist, mit einem ersten Anlenkhebel (22), der gelenkig mit dem ersten Ausleger (12) verbunden ist und einem zweiten Anlenkhebel (24), der gelenkig mit dem zweiten Ausleger (14) verbunden ist, wobei der erste Ausleger (12) und der zweite Ausleger (14) schwenkbar bezüglich wenigstens einer geometrischen Schwenkachse (S) angeordnet sind und mit einer Betätigungseinrichtung gekoppelt sind, welche eine Bewegung des ersten Auslegers (12) und des zweiten Auslegers (14) zum Bewegen der Formträgerhälften (2, 4) bewirkt
**dadurch gekennzeichnet, dass**,
der erste Ausleger (12) fest an der ersten Formträgerhälfte (2) und der zweite Ausleger (14) fest an der zweiten Formträgerhälfte (4) angeordnet ist, wobei die Blasstation (1) mittels eines Trägers (16) an einer Transporteinrichtung angeordnet ist und die geometrische Anordnung der Ausleger (12 14) asymmetrisch bezüglich einer geometrischen Mittellinie (M) der Blasstation (1) angeordnet ist, wobei der erste Ausleger (12) und der zweite Ausleger (14) eine unterschiedliche Länge aufweisen.

3. Vorrichtung nach Anspruch 1,
**dadurch gekennzeichnet, dass**
der erste Ausleger (12) und der zweite Ausleger (14) eine unterschiedliche Länge aufweisen.

4. Vorrichtung nach Anspruch 3,
**dadurch gekennzeichnet, dass**
die Transporteinrichtung ein um eine Drehachse drehbarer Träger ist.

5. Vorrichtung nach wenigstens einem der vorangegangenen Ansprüche,
**dadurch gekennzeichnet, dass**
die Ausleger (12, 14) und die Anlenkhebel (22, 24) derart angeordnet sind, dass sich die Formträgerhälften aufeinander zu bewegen, wenn sich die Anlenkhebel (22, 24) voneinander weg bewegen.

6. Vorrichtung nach wenigstens einem der vorangegangenen Ansprüche,
**dadurch gekennzeichnet, dass**
die Anlenkhebel (22, 24) gegenüber einer gemeinsamen Schwenkachse (X) schwenkbar sind.

7. Vorrichtung nach wenigstens einem der vorangegangenen Ansprüche,
**dadurch gekennzeichnet, dass**
das Betätigungselement (30) einen schwenkbaren Betätigungsarm aufweist, der an beiden Anlenkhebeln (22, 24) angelenkt ist.

8. Vorrichtung nach wenigstens einem der vorangegangenen Ansprüche,
**dadurch gekennzeichnet, dass**
der erste Ausleger (12) gegenüber dem ersten Anlenkhebel (22) bezüglich einer ersten Anlenkachse (A1) schwenkbar ist und der zweite Ausleger (14) gegenüber dem zweiten Anlenkhebel (24) bezüglich einer zweiten Anlenkachse (A2) schwenkbar ist.

9. Vorrichtung nach wenigstens einem der vorangegangenen Ansprüche,
**dadurch gekennzeichnet, dass**
ein geometrisches Viereck, welches aus den beiden Anlenkachsen (A1, A2), der Schwenkachse (S) und einer Achse (X) bezüglich derer die Anlenkhebel (22, 24) gemeinsam schwenkbar sind, gebildet wird, wenigstens zeitweise asymmetrisch bezüglich der geometrischen Mittellinie der Blasstation (1) ist.

10. Vorrichtung nach wenigstens einem der vorangegangenen Ansprüche,
**dadurch gekennzeichnet, dass**
einer Achse (X) bezüglich derer die Anlenkhebel (22, 24) gemeinsam schwenkbar sind auf einer Kreisbahn (K) bewegbar ist.

11. Vorrichtung nach Anspruch 9,
**dadurch gekennzeichnet, dass**
sich die Abstände zwischen der ersten Anlenkachse (A1) und der geometrischen Schwenkachse (S) und zwischen der zweiten Anlenkachse (A2) und der geometrischen Schwenkachse (S) unterscheiden.

12. Vorrichtung nach wenigstens einem der vorangegangenen Ansprüche 4-10,
**dadurch gekennzeichnet, dass**
die geometrische Schwenkachse (S) stationär gegenüber dem Träger (16) ist.

13. Vorrichtung nach wenigstens einem der vorangegangenen Ansprüche,
**dadurch gekennzeichnet, dass**
die Vorrichtung eine Kurve zum Betätigen der Betätigungseinrichtung (30) aufweist.

## Claims

1. A device for moulding plastic preforms into plastic containers, comprising at least one blow station (1) which has a first mould carrier half (2) and a second mould carrier half (4), with said first mould carrier half (2) and said second mould carrier half (4) surrounding a cavity (8), within which the plastic preforms may be expanded into plastic containers, and with said first mould carrier half (2) bering movable relative to said second mould carrier half (4), comprising a first cantilever (12) which is disposed on the first mould carrier half (2) and a second cantilever (14) which is disposed on the second mould carrier half (4), comprising a first hinge lever (22) which is hingedly connected to the first cantilever (12), and comprising a second hinge lever (24) which is hingedly connected to the second cantilever (14),
wherein the first cantilever (12) and the second cantilever (14) are arranged to be pivotable with regard to at least one geometrical pivot axis (S) and are coupled to an actuating device which causes a movement of the first cantilever (12) and of the second cantilever (14) for moving the mould carrier halfs (2, 4), **characterized in that** the first cantilever (12) is fixedly mounted to the first mould carrier half (2) and the second cantilever (14) is fixly mounted to the second mould carrier half (4), wherein the blow station (1) is mounted by means of a carrier (16) on transport means and wherein said carrier (16) extends through a geometrical plane which is delimited by the cantilevers (12, 14) and the hinge levers (22, 24).

2. A device for moulding plastic preforms into plastic containers, comprising at least one blow station (1) which has a first mould carrier half(2) and a second mould carrier half (4), with said first mould carrier half (2) and said second mould carrier half (4) surrounding a cavity (8), within which the plastic preforms may be expanded into plastic containers, and with said first mould carrier half (2) being movable relative to said second mould carrier half (4), comprising a first cantilever (12) which is disposed on the first mould carrier half (2) and a second cantilever (14) which is disposed on the second mould carrier half (4), comprising a first hinge lever (22) which is hingedly connected to the first cantilever (12), and comprising a second hinge lever (24) which is hingedly connected to the second cantilever (14),
wherein the first cantilever (12) and the second cantilever (14) are arranged to be pivotable with regard to at least one geometrical pivot axis (S) and are coupled to an actuating device which causes a movement of the first cantilever (12) and of the second cantilever (14) for moving the mould carrier halts (2, 4), **characterized in that** the first cantilever (12) is fixedly mounted to the first mould carrier half (2) and the second cantilever (14) is fixedly mounted to the second mould carrier half (4), wherein the blow station (1) is mounted by means of a carrier (16) on transport means and the geometrical arrangement of the cantilevers (12, 14) is arranged to be asymmetrical with regard to a geometrical centre line (M) of the blow station (1), wherein the first cantilever (12) and the second cantilever (14) have a different length.

3. The device as claimed in claim 1, **characterised in that** the first cantilever (12) and the second cantilever (14) have different lengths.

4. The device as claimed in claim3, **characterised in that** the transport means is a carrier which is rotatable about a rotary axis.

5. The device as claimed in at least one of the preceding claims, **characterised in that** the cantilevers (12, 14) and the hinge levers (22, 24) are arranged in such a way that the mould carrier halfs move towards each other as the hinge levers (22, 24) move away from each other.

6. The device as claimed in at least one of the preceding claims, **characterised in that** the hinge levers (22, 24) may be pivoted in relation to a common pivot axis (X).

7. The device as claimed in at least one of the preceding claims, **characterised in that** the actuating element (30) has a pivotable actuating arm which is hinged on to both hinge levers (22, 24).

8. The device as claimed in at least one of the preceding claims, **characterised in that** the first cantilever (12) may be pivoted in relation to the hinge lever (22) with regard to a first hinge axis (A1) and the second cantilever (14) may be pivoted in relation to a second hinge lever (24) with regard to a second hinge axis (A2).

9. The device as claimed in at least one of the preceding claims, **characterised in that** a geometrical quadrangle which is formed by the two hinge axes (A1, A2), the pivot axis (S) and an axis (X) with regard to which the hinge levers (22, 24) may be jointly pivoted, is at least periodically asymmetrical with regard to the geometrical centre line of the blow station (1).

10. The device as claimed in at least one of the preceding claims, **characterised in that** an axis (X), with regard to which the hinge levers (22, 24) may be jointly pivoted, is movable along a circular path (K).

11. The device as claimed in Claim 9, **characterised in that** the distances between the first hinge axis (A1) and the geometrical pivot axis (S) as well as between the second hinge axis (A2) and the geometric pivot axis (S) are different from each other.

12. The device as claimed in at least one of the preceding claims4-10, **characterised in that** the geometrical pivot axis (S) is stationary in relation to the carrier (16).

13. The device as claimed in at least one of the preceding claims, **characterised in that** the device has a cam for actuating the actuating device (30).

## Revendications

1. Dispositif pour la transformation d'ébauches en plastique en récipients plastique, comprenant au moins une station de soufflage (1), qui présente une première moitié de support de moule (2) et une seconde moitié de support de moule (4), la première moitié du support de moule (2) et la seconde moitié du support de moule (4) entourant une cavité (8), à l'intérieur de laquelle les ébauches en plastique peuvent se détendre pour devenir des récipients plastique et la première moitié du support de moule (2) étant mobile par rapport à la seconde moitié du support de moule (4), comprenant un premier cantilever (12), qui est disposé sur la première moitié du support de moule (2) et un second cantilever (14), qui est disposé sur la seconde moitié du support de moule (4), un premier levier articulé (22), qui est relié de façon articulée au premier cantilever (12) et un second levier articulé (24), qui est relié de façon articulée au second cantilever (14), le premier cantilever (12) et le second cantilever (14) étant disposés de façon à pouvoir basculer par rapport à au moins un axe de pivotement géométrique (S) et étant couplés avec un dispositif d'actionnement, qui entraîne un déplacement du premier cantilever (12) et du second cantilever (14) pour le déplacement des moitiés de support de moule (2, 4),
**caractérisé en ce que**
le premier cantilever (12) est disposé de façon fixe sur la première moitié du support de moule (2) et le second cantilever (14) de façon fixe sur la seconde moitié du support de moule (4), la station de soufflage (1) étant disposée au moyen d'un support (16) sur un dispositif de transport et ce support (16) s'étendant à travers une surface géométrique qui est délimitée par les cantilevers (12, 14) et les leviers articulés (22, 24).

2. Dispositif pour la transformation d'ébauches en plastique en récipients plastique, comprenant au moins une station de soufflage (1), qui présente une première moitié de support de moule (2) et une seconde moitié de support de moule (4), la première moitié du support de moule (2) et la seconde moitié du support de moule (4) entourant une cavité (8), à l'intérieur de laquelle les ébauches en plastique peuvent se détendre pour devenir des récipients plastique et la première moitié du support de moule (2) étant mobile par rapport à la seconde moitié du support de moule (4), comprenant un premier cantilever (12), qui est disposé sur la première moitié du support de moule (2) et un second cantilever (14), qui est disposé sur la seconde moitié du support de moule (4), un premier levier articulé (22), qui est relié de façon articulée au premier cantilever (12) et un second levier articulé (24), qui est relié de façon articulée au second cantilever (14), le premier cantilever (12) et le second cantilever (14) étant disposés de façon à pouvoir basculer par rapport à au moins un axe de pivotement géométrique (S) et sont couplés avec un dispositif d'actionnement, qui entraîne un déplacement du premier cantilever (12) et du second cantilever (14) pour le déplacement des moitiés de support de moule (2, 4),
**caractérisé en ce que**
le premier cantilever (12) est disposé de façon fixe sur la première moitié du support de moule (2) et le second cantilever (14) de façon fixe sur la seconde moitié du support de moule (4), la station de soufflage (1) étant disposée au moyen d'un support (16) sur un dispositif de transport et l'agencement géométrique des cantilevers (12, 14) est réalisé de façon asymétrique par rapport à une ligne médiane (M) géométrique de la station de soufflage (1), le premier cantilever (12) et le second cantilever (14) présentant une longueur différente.

3. Dispositif selon la revendication 1,
**caractérisé en ce que** le premier cantilever (12) et le second cantilever (14) présentent une longueur différente.

4. Dispositif selon la revendication 3,
**caractérisé en ce que**
le dispositif de transport est un support pouvant tourner autour d'un axe de rotation.

5. Dispositif selon au moins l'une des revendications précédentes,
**caractérisé en ce que**
les cantilevers (12, 14) et les leviers articulés (22, 24) sont disposés de telle sorte que les moitiés de support de moule se déplacent les unes vers les autres lorsque les leviers articulés (22, 24) se déplacent en partant de l'un ou de l'autre.

6. Dispositif selon au moins l'une des revendications précédentes,
**caractérisé en ce que**
les leviers articulés (22, 24) peuvent basculer par rapport à un axe de pivotement commun (X).

7. Dispositif selon au moins l'une des revendications précédentes,
**caractérisé en ce que**
l'élément d'actionnement (30) présente un bras d'actionnement pivotant, qui est articulé sur les deux leviers articulés (22, 24).

8. Dispositif selon au moins l'une des revendications précédentes,
**caractérisé en ce que**
le premier cantilever (12) peut pivoter par rapport au premier levier articulé (22) vis-à-vis d'un premier axe articulé (A1) et le second cantilever (14) peut pivoter par rapport au second levier articulé (24) vis-à-vis d'un second axe articulé (A2).

9. Dispositif selon au moins l'une des revendications précédentes,
**caractérisé**
**en ce qu'**un carré géométrique, qui est formé des deux axes articulés (A1, A2), de l'axe de pivotement (5) et d'un axe (X) par rapport auxquels les leviers articulés (22, 24) peuvent pivoter ensemble, et au moins temporairement de façon asymétrique par rapport à l'axe médian géométrique de la station de soufflage (1).

10. Dispositif selon au moins l'une des revendications précédentes,
**caractérisé**
**en ce qu'**il est mobile sur une trajectoire circulaire (K) sur un axe (X), par rapport auquel les leviers articulés (22, 24) peuvent pivoter ensemble.

11. Dispositif selon la revendication 9,
**caractérisé en ce que**
les espacements entre le premier axe articulé (A1) et l'axe de pivotement (S) géométrique et entre le second axe articulé (A2) et l'axe de pivotement géométrique (S) se différencient.

12. Dispositif selon au moins l'une des revendications précédentes 4 à 10,
**caractérisé en ce que** l'axe de pivotement géométrique (S) est fixe par rapport au support (16).

13. Dispositif selon au moins l'une des revendications précédentes,
**caractérisé en ce que**
le dispositif présente une came pour l'actionnement du dispositif d'actionnement (30).
